# EUROPEAN PATENT APPLICATION

(11) **EP 4 845 006 A1**
(43) Date of publication of application: **25.11.2026**
(21) Application number: 26175152.3
(22) Date of filing: 28.04.2026
(51) Int. Cl.: H02M 1/00, H02M 1/42, H02M 7/162

(54) **CONVERTER ARCHITECTURE WITH POWER FACTOR CORRECTION AND CORRESPONDING METHOD FOR PERFORMING A CONVERSION WITH POWER FACTOR CORRECTION**

(30) Priority: 22.05.2025 IT 202500011641
(71) Applicant: STMicroelectronics International N.V., 1228 Plan-les-Ouates, Geneva (CH)
(72) Inventor: D'ANGELO, Giuseppe, 80030 Tufino (Napoli) (IT)
(74) Representative: Buzzi, Notaro & Antonielli d'Oulx S.p.A.

(57) **Abstract**

A converter architecture (41) with Power Factor Correction, receiving an AC input voltage (V_{AC}) and outputting a DC voltage (V_{BUS}), comprising one or more legs (B1, B2), coupled by at least a respective inductor (46₁, 46₂) to said AC input voltage (V_{AC}), comprising switches (44₁, 45₁, 44₂, 45₂) arranged in a totem pole configuration and driven by respective one or more PWM signals (PWM₁, PWM₂) generated by a control module (50, 60) on the basis of signals (V_{AC}, V_{BUS_FBK}, I_{FBK1}, I_{FBK2}) measured in said converter architecture (41) and reference signals (I_{REF}, V_{BUS_REF}), such control module (50, 60) comprising a voltage regulator (11), in particular a PID regulator, receiving as input a voltage error between a measure of said DC voltage (V_{BUS_FSK}) and a reference voltage (V_{BUS_REF}) and configured to supply at output a reference current (I_{REF}), a difference module (14, 17) being configured to calculate a respective error current (I_{ERR1}, I_{ERR2}) as difference of the reference current (I_{REF}) to a respective feedback current (I_{FBK1}, I_{FBK2}) flowing in said respective inductor (46₁, 46₂), which is then fed to one or more respective current regulators (16, 19; 23, 25) which are configured to output a duty cycle parameter (PWM_{TON1}, PWM_{TON2}) of said respective PWM signals (PWM₁, PWM₂),
wherein the control module (60) further comprises a module (21, 22) configured to calculate a complement (I_{REF_COMP}) of said reference current (I_{REF}) and said one or more respective current regulators (16, 19; 23, 25) which are configured to output a duty cycle parameter (PWM_{TON1}, PWM_{TON2}) of said respective PWM signals (PWM₁, PWM₂) comprise a module (23, 25) configured to sum said complement (I_{REF_COMP}) of said reference current (I_{REF}) to said respective error current (I_{ERR1}, I_{ERR2}) to obtain a respective duty cycle parameter (PWM_{TOFF1}, PWM_{TOFF1}) of said respective PWM signals (PWM₁, PWM₂).

## Description

### Technical field

Embodiments of the present disclosure relate to techniques for performing a conversion with PFC (Power Factor Correction) by an architecture comprising one or more legs comprising switches arranged in a totem pole configuration and driven by PWM signals, controlled by a control module comprising a voltage regulator and one or more current regulators to supply the PWM signals for the one or more legs.

The present disclosure refers in particular to power supplies for battery electric vehicles (BEV).

### Background

Demand for battery electric vehicles (BEV) is quickly increasing. The vehicle electrical system changes significantly with the passage to electrical traction where the motive power in BEVs is provided by a three-phase electric motor (or motors integrated into the wheels of the vehicle). The electric motors are powered by a traction inverter that sources energy from large, high-voltage (HV) battery packs. The inverter is either connected directly to the HV battery or through a DC-DC converter, depending on nominal voltage of the battery. The state and monitoring of the HV battery are handled by the battery management system (BMS). Charging requires a DC (Direct Current) supply. This is not available in most homes and commercial spaces since electricity is transmitted over the electrical grid as AC (Alternate Current). Thus, AC needs to be converted into DC so that the BMS can control the charging of the HV battery. A possible approach to do this is using an on-board charger (OBC) that is permanently installed in the vehicle and, on demand, it is connected to a suitable electric vehicle service equipment (EVSE) box providing the AC supply. Another approach may require that the EVSE is responsible for converting AC to DC, which is then passed through the charging cable and connector to the BEV. Being DC, this power supply can be used directly by the BMS, thus bypassing the OBC entirely. DC EVSEs are significantly more expensive than the AC ones. The OBC design is similar to that of other power conversion systems. The incoming single-or three-phase AC passes through a power-factor correction (PFC) stage and is converted to HV DC. A microcontroller unit (MCU) is typically employed to control these blocks using digital control methods. In addition to managing each of these stages, it is also responsible for handling safety, system monitoring, and communication with the EVSE.

The power factor correction stage shapes the input current of the power supply to maximize the provided real power. Ideally, the load should emulate a pure resistor to have zero reactive power. In this scenario the current is a perfect replica, free of harmonics, of the input voltage (usually a sine wave) and is exactly in phase with it. The freedom from harmonics minimizes losses and costs associated not only with the distribution of the power, but also with the generation of the power and the capital equipment involved in the process and it also minimizes interference with other devices being powered from the same source.

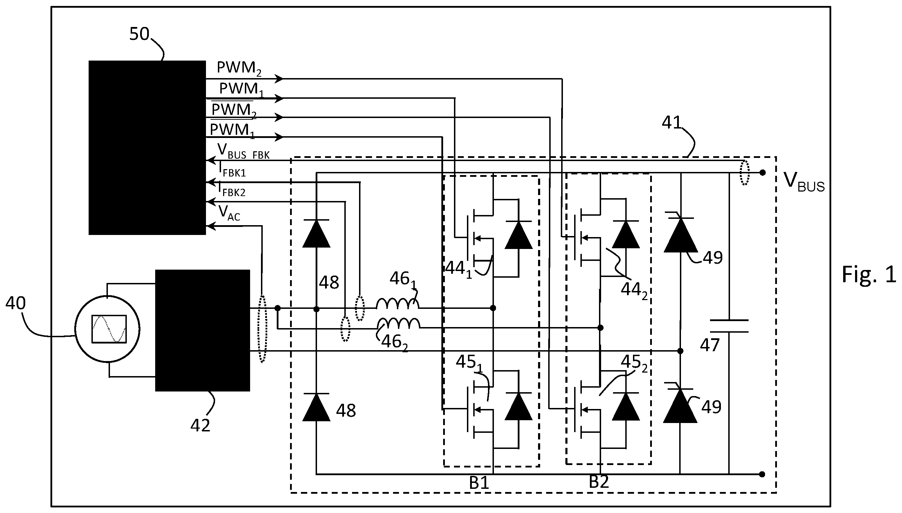

Figure 1 shows a schematics of an embodiment of a single-phase PFC AC to DC converter architecture, which in the example comprises two parallel legs B1 and B2 (interleaved branches) that are controlled to shape the input current to follow a sinusoidal reference while boosting the output DC voltage.

In figure 1 it is shown thus an AC input source 40, typically single-phase, delivering an input alternate voltage V_{AC} to the PFC converter stage, indicated with 41, through an input EMI filter 42 coupled connected to the AC source 40 to suppress high-frequency noise and interference. The EMI filter 42 is here represented external to the PFC converter stage 41, but may be also considered as comprised in the PFC converter stage 41.

The PFC converter stage 41 comprises then a bridge network which comprises in a first leg B1 a first high side switch, in particular a MOSFET, 44₁, and a first low side switch, in particular a MOSFET, 45₁, arranged in a totem pole configuration, i.e., in series with the source of the high side coupled to the drain of the low side in a middle node. Similarly the second leg B2 comprises a second high side switch, in particular a MOSFET, 44₂, and a first low side switch, in particular a MOSFET, 45₂, arranged in a totem pole configuration.

Each leg B1, B2 is respectively coupled, in particular at the node in common, o middle node, between the switches of a leg, to a respective inductor 46₁, 46₂ coupled through the EMI filter 42 to the AC input source 40 and through which an input current flows and energy is stored.

A common output capacitor 47 is arranged in parallel at the legs B1 and B2, that filters the rectified and boosted voltage to produce a regulated DC bus voltage V_{BUS}.

The converter 41 may comprise also two protection diodes 48 in series one with respect to the other and in parallel with the legs B1, B2, with their middle node coupled to the input alternate voltage V_{AC}, in particular taken at the output of the EMI filter 42, and two Zener diodes 49₁, 49₂ in series and in parallel with the capacitor 47 with their middle node couple to the other terminal of the EMI filter 42, e.g. the ground voltage. In embodiments, the Zener diodes can be also SCR or controlled switches.

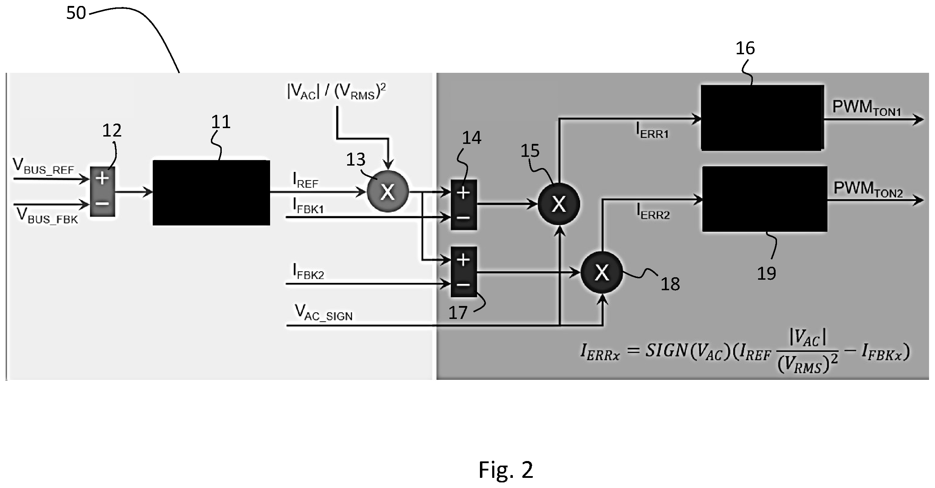

A digital control unit 50, e.g. a microcontroller, is configured to:
measure the input alternate voltage V_{AC} at the output of the EMI filter 42 and compute its root-mean-square voltage V_{RMS};
sense the output voltage, i.e. DC bus voltage V_{BUS}, as sensed output voltage V_{BUS_FBK};
monitor inductor currents I_{FBK1} and I_{FBK2}, flowing in the inductors 46₁, 46₂;
execute a control procedure as defined with reference to figure 2.

A control procedure performed by the digital control unit 50 computes PWM (Pulse Width Modulated) signals based on such sensed variables, e.g., V_{AC}, V_{RMS}, V_{BUS_FBK}, I_{FBK1}, I_{FBK2} and reference values, e.g. V_{BUS_REF}, I_{REF}, which modulates the duty cycles of the high side switches 44₁, 44₂ by respective PWM signal PWM₁ and PWM₂, while complementary PWM signal PWM₁ and PWM₂ drive the low side switches 45₁, 45₂ to regulate power flow.

The PWM signals PWM₁ and PWM₂ are interleaved, meaning they operate at the same frequency but are 180 degrees out of phase to reduce input and output ripple.

The overall structure enables continuous conduction mode (CCM) operation and provides high-efficiency AC-DC conversion with improved power factor and reduced total harmonic distortion (THD).

This PFC power supply architecture is designed to work in continuous conduction mode (CCM) using average current control with two independent current regulators, or also loops, (2P2Z or PID) and a common voltage control regulator. The common voltage control regulator runs e.g. at 6 kHz providing the reference for both the currents and the two current control loops run, e.g. at 70 kHz providing the duty cycle for each leg B1, B2.

In general the frequency for the common voltage regulator may be typically in the range 5-10 kHz and for the current regulator in the range 50-100 kHz. Increasing both such frequencies increases the precision of the controls, but the choice must take in account the trade-off between precision and performance, some MCUs could not be able to correctly execute the controls at such high frequencies together with the other tasks they have to execute.

In figure 2 is detailed in a block diagram the digital control unit 50, which comprises a voltage regulator 11, in the example a PID regulator, configured to receive the difference voltage bus feedback signal V_{BUS_FBK} and a voltage bus reference V_{BUS_REF}, performed in a difference block 12, e.g. a differential amplifier, outputting a reference current I_{REF}. A normalization block 13 that adjusts the reference current I_{REF} based on the measured input voltage, i.e., it applies a scaling factor based on the ratio |V_{AC}| / (V_{RMS})², i.e. the ratio of the alternate input voltage V_{AC} to the square of its root mean square V_{RMS}, value to shape the reference current I_{REF} according to the input sinusoidal waveform VAC.

Then a comparison of the scaled current I_{REF} outputted from block 13 reference to the measured inductor current of the first leg I_{FBK1}, is performed in a difference block 14, which then is multiplied, in a multiplier 15 by a sign of alternate input voltage V_{AC}, V_{AC_SIGN} to obtain an error current I_{ERR1}, which is then inputted to a first current controller 16, implemented as a 2P2Z or PID controller, which outputs a PWM duty cycle of the PWM signal PWM₁ for the switches of the first leg B1. In particular, in figure 2 it is shown that the first current controller 16 outputs the PWM ON time PWM_{TON1} of the PWM signal PWM₁. A PWM generator, not shown, for instance a microcontroller, then on the basis of the PWM ON time PWM_{TON1} generates the PWM signal PWM₁ for the high side switch and also the complementary PWM signal PWM₁ for the low side switch. A blanking time to avoid short circuit between supply and ground is preferably used in the PWM signal, in a way per se known to the person skilled in the art. The blanking time is predefined and fixed. Since the PFC architecture 40 has two legs, then the controller 49 includes also performing a comparison of the scaled current I_{REF} outputted from block 13 reference to the measured inductor current of the second leg I_{FBK2}, performed in a difference block 17, which then is multiplied, in a multiplier 18 by a sign of alternate input voltage V_{AC}, V_{AC_SIGN} to obtain a respective error current I_{ERR2}, which is then inputted to a second current controller 19, implemented as a 2P2Z or PID controller, which outputs the PWM ON time PWM_{TON2} of the PWM signal PWM₂. A PWM generator, not shown, then on the basis of the PWM ON time PWM_{TON2} generates the PWM signal PWM₂ for the high side switch and also the complementary PWM signal PWM₂ for the low side switch. The sign of alternate input voltage V_{AC}, V_{AC_SIGN} may be obtained by a sign detection module operating on the alternate input voltage V_{AC}, in a manner known per se to the person skilled in the art.

Thus, substantially the output of the voltage regulator I_{REF} is multiplied by the measured V_{AC}/(V_{RMS})² to provide the current reference with the shape of the voltage supply for each current regulator (2P2Z or PID) together with the relevant current feedback to calculate the duty cycle for each leg of the interleaved totem-pole (which may be also only one). The term 1/(V_{RMS})² ensures constant power if the voltage supply amplitude changes.

An example of the architecture of figure 1 and 2 may be found in the on-board charger SR5E1 line - 7 KW EV/HEV of STMicroelectronics (URL https://www.st.com/resource/en/application_note/an5949-sr5e1-line--7-kw-evhev-onboardcharger-reference-design-stmicroelectronics.pdf)

This PFC converter architecture 41, from AC to DC, is thus designed to work in continuous conduction mode (CCM) using average current control with two independent current loops (2P2Z or PID) and a common voltage control loop. The common voltage control loop may run at 6 kHz (or 10 kHz) providing the reference for both the currents and the two current control loops may run at 70 kHz (or 100 kHz) providing the duty cycle for each leg of the interleaved totem-pole.

However, test indicates that in a PFC converter architecture like the one depicted in figure 1 and 2 the computational load is quite high. Also a significant distortion is present near the zero-crossing (zero-crossing distortion) of the input voltage and away from the zero-crossing (not-perfect sinusoidal shape). These distortions produce a significant increase of the THD, which can cause voltage stability problems, electromagnetic interference (EMI), and equipment damage.

### Object and summary

In view of the above, it is an objective of the present disclosure to provide solutions which overcome one or more of the above drawbacks, providing a converter architecture with PFC with reduced distortion.

According to one or more embodiments, one or more of the above objectives is achieved by means of a converter architecture having the features specifically set forth in the claims that follow.

One or more embodiments concern a related method.

The claims are an integral part of the technical teaching of the disclosure provided herein.

As mentioned before, the present disclosure relates to a converter architecture with Power Factor Correction, receiving an AC input voltage and outputting a DC voltage, comprising one or more legs, coupled by at least a respective inductor to said AC input voltage, comprising switches arranged in a totem pole configuration and driven by respective one or more PWM signals generated by a control module on the basis of signals measured in said converter architecture and reference signals, such control module comprising a voltage regulator, in particular a PID regulator, receiving as input a voltage error between a measure of said DC voltage and a reference voltage and configured to supply at output a reference current, a difference module being configured to calculate a respective error current as difference of the reference current to a respective feedback current flowing in said respective inductor, which is then fed to one or more respective current regulators which are configured to output a duty cycle parameter of said respective PWM signals,
wherein the control module further comprises a module configured to calculate a complement of said reference current and said one or more respective current regulators which are configured to output a duty cycle parameter of said respective PWM signals comprise a module configured to sum said complement of said reference current to said respective error current to obtain a respective duty cycle parameter of said respective PWM signals.

In variant embodiments, said duty cycle parameter is an off time of said one or more PWM signals which is supplied to a complementing module to obtain an on time of said one or more PWM signals.

In variant embodiments, said duty cycle parameter is an on time of said one or more PWM signals.

In variant embodiments, the architecture comprises modules to scale said reference current and complement reference current to the ratio of the absolute value of the AC input voltage to the square of its root mean square value.

In variant embodiments, said signals measured in said converter architecture comprise the AC input voltage, the measure of the output DC voltage, the one or more feedback currents, while said reference signals include at least said reference current and voltage reference.

In variant embodiments, the architecture comprises a module to detect the sign of said AC input voltage and a module to multiply the output of said difference module configured to calculate an error current as difference of the reference current to a respective feedback current by the output of said module to detect the sign of said AC input voltage before supplying it to said module configured to sum said complement of said reference current to said error current.

In variant embodiments, said reference current is normalized in an interval between zero and one and said complement of reference current is calculated as the complement to one of said normalized reference current.

In variant embodiments, said converter architecture comprise a single leg.

The solution in embodiments is also directed to a method for performing a conversion with Power Factor Correction from an AC input voltage to an output DC voltage by the converted architecture of any of the previous embodiments comprising performing a control procedure generating PWM signals on the basis of signals measured in said converter architecture and reference signals, comprising performing a voltage regulation, in particular PID, having as input a voltage error between a measure of said DC voltage and a reference voltage and outputting a reference current, calculating an error current as difference of the reference current to a respective feedback current flowing in said respective inductor, which is used as input by one or more current regulation operations which are configured to output a duty cycle parameter of said respective PWM signals,
said controlling procedure further comprising calculating a complement of said reference current and summing said complement of said reference current to said error current to obtain a duty cycle parameter duty cycle parameter of said respective PWM signals.

Solutions as described herein facilitate better tracking of the sinusoidal reference and significantly reduces zero-crossing distortion, yielding enhanced linearity, lower harmonic distortion, and improved power factor performance with reduced computational complexity.

### Brief description of the figures

Embodiments of the present disclosure will now be described with reference to the annexed drawings, which are provided purely by way of non-limiting example and in which:
- Figure 1 and 2 have been described in the foregoing;
- Figure 3 is a schematic diagram of a control module for a PFC converter according to embodiments of the solution disclosed herein.

Corresponding numerals and symbols in the different figures generally refer to corresponding parts unless otherwise indicated.

The figures are drawn to clearly illustrate the relevant aspects of the embodiments and are not necessarily drawn to scale.

The edges of features drawn in the figures do not necessarily indicate the termination of the extent of the feature.

### Detailed description

In the ensuing description one or more specific details are illustrated, aimed at providing an in-depth understanding of examples of embodiments of this description. The embodiments may be obtained without one or more of the specific details, or with other methods, components, materials, etc. In other cases, known structures, materials, or operations are not illustrated or described in detail so that certain aspects of embodiments will not be obscured.

Reference to "an embodiment" or "one embodiment" in the framework of the present description is intended to indicate that a particular configuration, structure, or characteristic described in relation to the embodiment is comprised in at least one embodiment. Hence, phrases such as "in an embodiment" or "in one embodiment" that may be present in one or more points of the present description do not necessarily refer to one and the same embodiment.

Moreover, particular configurations, structures, or characteristics may be combined in any adequate way in one or more embodiments.

The headings/references used herein are provided merely for convenience and hence do not define the extent of protection or the scope of the embodiments.

For simplicity and ease of explanation, throughout this description, and unless the context indicates otherwise, like parts or elements are indicated in the various figures with like reference signs, and a corresponding description will not be repeated for each and every figure.

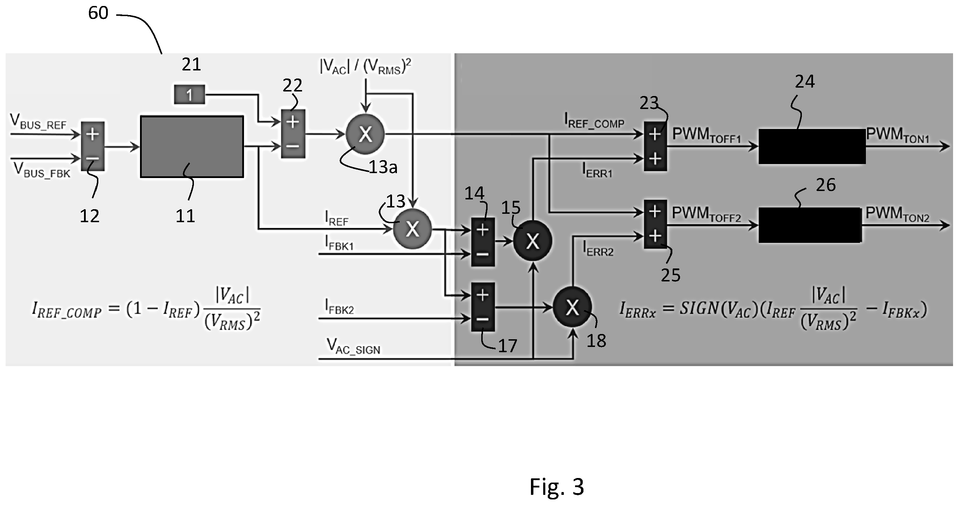

In figure 3 is detailed in a block diagram of an embodiment 60 of the digital control unit coupled to the PFC converter architecture 41 in figure 2, like the digital control unit 50 configured to perform the control procedure of the converter architecture 41. Similarly to the digital control unit 50, the digital control unit 60 comprises the voltage regulator 11, in the example a PID regulator, configured to receive the difference voltage bus feedback signal V_{BUS_FBK} and a voltage bus reference V_{BUS_REF}, performed in a difference block 12, e.g. a differential amplifier, outputting a reference current I_{REF}. The reference current I_{REF} may be normalized in the range [0, 1], so that a complement calculation block 22 computes the complement to one of the normalized reference current I_{REF} (as shown simply performs the difference 1-I_{REF}), which is outputted to a complement normalization block 13a, that adjusts the output of complement calculation block 22 based on the measured input voltage V_{AC}, in particular measured at the output of the EMI filter 42, i.e., it applies a scaling factor based on the ratio |V_{AC}|/(V_{RMS})², the ratio of the alternate input voltage V_{AC} to the square of its root mean square V_{RMS}. Thus, complement normalization block 13a output, the complement to the maximum normalized value, a complement reference current I_{REF _COMP}. In a block 23 is performed the difference of the reference current I_{REF} and of the complement reference current I_{REF_COMP}. The control unit 60 comprises also the normalization block 13 already described with reference to figure 2 that adjusts the reference current I_{REF} based on the measured input voltage, i.e., it applies a scaling factor based on the ratio |V_{AC}|/(V_{RMS})², i.e., the ratio of the alternate input voltage V_{AC} to the square of its root mean square V_{RMS}, value to shape the reference current I_{REF} according to the input sinusoidal waveform V_{AC}.

Like in figure 2, a difference of the scaled version of the reference current I_{REF} outputted from block 13 to the measured inductor current of the first leg I_{FBK1}, is computed in a difference block 14, which output then is multiplied, in a multiplier 15 by a sign of alternate input voltage V_{AC}, V_{AC_SIGN} to obtain an error current I_{ERR1} for the first leg B1 The output of the multiplier 15, i.e., the current error I_{ERR1}, is then sent to a summation block 23 along with the complement reference current I_{REF_COMP}. The sum of the current error I_{ERR1} and the complement reference current I_{REF_COMP} corresponds to the off time of the first PWM signal PWM₁, i.e., PWM_{1TOFF}, from which then in a complement calculation block 24 is obtained the on time of the first PWM signal PWM₁, i.e., PWM_{1TON}, for the first leg B1.

Also in this case, since there are two legs, for the leg B2 similarly a comparison of the scaled current I_{REF} outputted from block 13 reference to the measured inductor current of the first leg I_{FBK2}, is performed in a difference block 17 which then is multiplied, in a multiplier 18 by a sign of alternate input voltage V_{AC}, V_{AC_SIGN} to obtain an error current I_{ERR2}. The output of the multiplier 18, i.e., the current error I_{ERR2}, is then sent to a summation block 25 along with the complement reference current I_{REF_COMP}. The sum of the current error I_{ERR2} for the second leg and the complement reference current I_{REF_COMP} corresponds to the off time of the second leg PWM signal PWM₂, i.e., PWM_{2TOFF}, from which then in a complement calculation block 26 is obtained the on time of the first PWM signal PWM₂, i.e., PWM_{2TON}, for the second leg B2. Of course, in general module 60 outputs the on or off time of the PWM signal, which can be complemented or not, i.e. the module generating the PWM signal can also generate the PWM signal based only on the off time, i.e. blocks 24 and 26 are not necessary. It is noted that the module generating the PWM signal when operates in complementary mode typically accepts at input the on-time, then it generates both PWM signals, i.e. normal and complementary. Anyway, this depends from the specific MCU PWM generation module and usually this is not a constraint because calculating the off-time is equivalent to calculate the on-time, knowing the PWM period. Blocks 24 and 26 also may be included in the PWM generation module.

Thus, the solution provides that the duty cycle of the PWM signals, e.g., PWMₓ, where x indicated the x-th leg of the converter, x=1, 2..., is the result of a sum of two current components, which contribute to determine the duty cycle value:
- the first component (error current I_{ERRx}) is based on the difference between the reference current I_{REF}, in particular its version scaled to the amplitude of the input voltage V_{AC}, i.e., ratio |V_{AC}|/(V_{RMS})², and the feedback current I_{FBKx}, i.e., the current flowing in the leg, in particular taking in account (i.e. multiplying by it, so that the first contribute is always positive) the sign of the input alternate voltage V_{AC}. It reaches its minimum value when the input alternate voltage V_{AC} is zero. Specifically, it is I_{ERRx}=V_{AC_SIGN}*(I_{REF}*|V_{AC}|/(V_{RMS})² - I_{FBKx});
- the second component (complementary reference current I_{REF_COMP}) is based on the reference current I_{REF} and the ratio |V_{AC}|/(V_{RMS})², i.e. the scaled version of the reference current I_{REF}. It reaches its minimum value when the input alternate voltage V_{AC} is zero as well, but the complement operation ensures a highest value of this second contribute approaching the current reference zero-crossing. Specifically, it is I_{REF_COMP}=(1-I_{REF}) * (|V_{AC}|/(V_{RMS})²).

The sum of both component reaches its minimum value on the current reference zero-crossing and accordingly the driving signals are maximized.

With the control module 60 as described with reference to figure 3, in place of the control module 50, in the schematics of the architecture of figure 1, the resulting duty cycle is maximized at the zero-crossing of the current reference, approaching or reaching values for instance greater than 0.95 and ideally up to 1.0. This modulation ensures better tracking of the sinusoidal reference and significantly reduces zero-crossing distortion. The dual-contribution method described above is a key aspect of the proposed control technique, yielding enhanced linearity, lower harmonic distortion, and improved power factor performance with reduced computational complexity.

It is pointed out that in the control module 60 the common voltage control loop may run e.g. at 10 kHz), but the two current control loops may run at 10 kHz as well (although operating at higher frequency, e.g. 100 kHz is still a possibility). Simulation results show that an improvement performance is any way obtained with respect to known solution even if the frequency of the proposed control loop is reduced. This, since the control has not a state that the controller must charge/discharge tracking the current.

Thus, as described above, the solution here described refers to a converter architecture, e.g., 41, with Power Factor Correction, receiving an AC input voltage, e.g., V_{AC}, and outputting a DC voltage, e.g., V_{BUS}, comprising one or more legs, in the example B1, B2, although it can be for instance a single leg, coupled by at least an inductor, e.g., 46₁, 46₂, to said AC input voltage, V_{AC}, comprising switches, in particular MOSFETs, e.g., 44₁, 45₁, 44₂, 45₂, arranged in a totem pole configuration and driven by respective PWM signals, i.e., PWM₁, PWM₂ for the high side switches and PWM₁, PWM₂ for the low side switches, or vice versa. Of course, the PWM signal may be a single signal for one leg, two out of phase of 180° for two legs and x PWM signals for x legs with other phase relationship, considering that The solution here described regulates the duty cycle of each signal, not the phase. The PWM signals, i.e., PWM₁, PWM₂, are generated by a control module, e.g. 60, which takes the place of prior art module 50, on the basis of signals, e.g., V_{AC}, V_{BUS_FBK}, I_{FBK1}, I_{FBK2}, measured in said converter architecture with PFC, 41, and reference signals, e.g. I_{REF}, V_{BUS_REF}, such control module, e.g., 60 comprising a voltage regulator 11, or loop, in particular a PID regulator, receiving as input a voltage error between a measure of said DC voltage, e.g., V_{BUS_FBK}, which is the measure of the DC output voltage, and a reference voltage, e.g., V_{BUS_REF}, and configured to supply at output a reference current, e.g., I_{REF}, a difference module, e.g., 14, 17 for the two legs, being configured to calculate an error current, **e.g.,** I_{ERR1}, I_{ERR2}, as difference of the reference current, e.g., I_{REF}, to a respective feedback current, e.g., I_{FBK1}, I_{FBK2}, flowing in said respective inductor, e.g., 46₁, 46₂, which is then fed to a one or more respective current regulators, in particular regulator 23, 25, which are configured to output a respective duty cycle parameter, e.g., the on time PWM_{TON1}, PWM_{TON2}, of said respective PWM signals, e.g., PWM₁, PWM₂,
wherein the control module, e.g., 60, further comprises a module, e.g., 21, 22, configured to calculate a complement, e.g., I_{REF_COMP}, of said reference current, e.g., I_{REF}, in particular a complement to one on a normalized to one version of I_{REF}, and said one or more respective current regulators, in particular 23, 25, which are configured to output a respective duty cycle parameter, of said respective PWM signals, e.g., PWM₁, PWM₂, comprise a module, e.g., 23, 25, configured to sum said complement, e.g., I_{REF _COMP}, of said reference current, e.g., I_{REF}, to said error current, I_{ERR1}, I_{ERR2} respectively for each legs, to obtain a duty cycle parameter, in the example PWM_{TOFF1}, PWM_{TOFF1} which is then complemented to obtain on-times, of said respective PWM signals, PWM₁, PWM₂.

As mentioned, the duty cycle parameters, on or off time, may be used by the PWM generator of the architecture to generate the corresponding PWM signals.

In the examples shown, said duty cycle parameter, PWM_{TOFF1}, PWM_{TOFF1} is an off time of said PWM signals, PWM₁, PWM₂, which is supplied to a complementing module, e.g., 24, 26, to obtain on time, PWM_{TON1}, PWM_{TON2}, of said one or more PWM signals, PWM₁, PWM₂.

As shown, are provided modules to scale said reference current, e.g., I_{REF}, and complement reference current, e.g., I_{REF _COMP}, by the ratio of the absolute value of the AC input voltage, V_{AC} to the square of its root mean square value, V_{RMS}.

Said signals, e.g., V_{AC}, V_{BUS_FBK}, I_{FBK1}, I_{FBK2}, measured in said PFC converter architecture, 41, comprise the AC input voltage V_{AC}, in particular taken at the output of the EMI filter 42, the measure of the output DC voltage, V_{BUS_FBK}, the one or more feedback currents, I_{FBK1}, I_{FBK2}, i.e., currents flowing in the inductors, while said reference signals include at least said reference current and voltage reference, i.e., a measure V_{BUS_FBK} of the bus voltage V_{BUS}, which is the DC output voltage of the current. In the example such measure V_{BUS_FBK} substantially corresponds to the bus voltage V_{BUS}.

Also, a module to detect the sign of said AC input voltage V_{AC} and a module to multiply the output of said difference module, e.g., 14, 17, configured to calculate an error current, e.g., I_{ERR1}, I_{ERR2}, as difference of the reference current I_{REF} to a respective feedback current, e.g., I_{FBK1}, I_{FBK2}, by the output of said module to detect the sign of said AC input voltage, V_{AC}, before supplying it to said module 23, 25 configured to sum said complement (I_{REF_COMP}) of said reference current, e.g., I_{REF} to said error current, I_{ERR1}, I_{ERR2}.

The reference current I_{REF} is preferably normalized in an interval between zero and one and said complement I_{REF _COMP} of reference current is calculated as the complement to one of said normalized reference current.

As mentioned, the converter architecture 41 may comprise a single leg, with two switches, high side and low side, in totem pole.

The solution correspondingly discloses a method for performing a conversion with Power Factor Correction from an AC input voltage, e.g., V_{AC}, to an output DC voltage, e.g., V_{BUS}, by the converted architecture , e.g., 41, as described here in the embodiments hereabove, comprising performing a control procedure generating PWM signals , e.g., PWM₁, PWM₂, on the basis of signals, e.g., V_{AC}, V_{BUS_FBK}, I_{FBK1}, I_{FBK2}, measured in said converter architecture, e.g., 41 and reference signals, e.g., I_{REF}, V_{BUS_REF}, comprising performing a voltage regulation, e.g., 11, in particular PID, having as input a voltage error between a measure of said DC voltage, e.g., V_{BUS_FBK} and a reference voltage, e.g., V_{BUS_REF} and outputting a reference current, e.g., I_{REF}, calculating an error current, e.g., I_{ERR1}, I_{ERR2}, as difference of the reference current, e.g., I_{REF} to a respective feedback current, e.g., I_{FBK1}, I_{FBK2} flowing in said respective inductor, which is used as input by one or more current regulation, e.g., 16, 19; 23, 25, operations which are configured to output a duty cycle parameter, e.g., PWM_{TON1}, PWM_{TON2} of said respective PWM signals, e.g., PWM₁, PWM₂,
said controlling procedure further comprising calculating a complement, e.g., I_{REF_COMP} of said reference current, e.g., I_{REF}, and summing, e.g., 23, 25 said complement, e.g., I_{REF _COMP}, of said reference current, e.g., I_{REF} to said error current, e.g., I_{ERR1}, I_{ERR2} to obtain a duty cycle parameter duty cycle parameter, e.g., PWM_{TOFF1}, PWM_{TOFF1} of said respective PWM signals, e.g., PWM₁, PWM₂.

From the above description are clear the advantages of the solution, which by using two contributes, one with the reference current, and one with the complement of the reference current, ensures better tracking of the sinusoidal reference and significantly reduces zero-crossing distortion, yielding enhanced linearity, lower harmonic distortion, and improved power factor performance with reduced computational complexity.

Without prejudice to the underlying principles, the details and the embodiments may vary, even significantly, with respect to what has been described by way of example only without departing from the scope of the embodiments.
The extent of protection is determined by the annexed claims.

## Claims

1. A converter architecture (41) with Power Factor Correction, receiving an AC input voltage (V_{AC}) and outputting a DC voltage (V_{BUS}), comprising one or more legs (B1, B2), coupled by at least a respective inductor (46₁, 46₂) to said AC input voltage (V_{AC}), comprising switches (44₁, 45₁, 44₂, 45₂) arranged in a totem pole configuration and driven by respective one or more PWM signals (PWM₁, PWM₂) generated by a control module (50, 60) on the basis of signals (V_{AC}, V_{BUS_FBK}, I_{FBK1} , I_{FBK2}) measured in said converter architecture (41) and reference signals (I_{REF}, V_{BUS_REF}), such control module (50, 60) comprising a voltage regulator (11), in particular a PID regulator, receiving as input a voltage error between a measure of said DC voltage (V_{BUS_FBK}) and a reference voltage (V_{BUS_REF}) and configured to supply at output a reference current (I_{REF}), a difference module (14, 17) being configured to calculate a respective error current (I_{ERR1}, I_{ERR2}) as difference of the reference current (I_{REF}) to a respective feedback current (I_{FBK1}, I_{FBK2}) flowing in said respective inductor (46₁, 46₂), which is then fed to one or more respective current regulators (16, 19; 23, 25) which are configured to output a duty cycle parameter (PWM_{TON1}, PWM_{TON2}) of said respective PWM signals (PWM₁, PWM₂),
wherein the control module (60) further comprises a module (21, 22) configured to calculate a complement (I_{REF_COMP}) of said reference current (I_{REF}) and said one or more respective current regulators (16, 19; 23, 25) which are configured to output a duty cycle parameter (PWM_{TON1}, PWM_{TON2}) of said respective PWM signals (PWM₁, PWM₂) comprise a module (23, 25) configured to sum said complement (I_{REF_COMP}) of said reference current (I_{REF}) to said respective error current (I_{ERR1}, I_{ERR2}) to obtain a respective duty cycle parameter (PWM_{TOFF1}, PWM_{TOFF1}) of said respective PWM signals (PWM₁, PWM₂) .

2. A converter architecture (41) according to claim 1, wherein said duty cycle parameter (PWM_{TOFF1}, PWM_{TOFF1}) is an off time of said one or more PWM signals (PWM₁, PWM₂) which is supplied to a complementing module (24, 26) to obtain an on time (PWM_{TON1}, PWM_{TON2}) of said one or more PWM signals (PWM₁, PWM₂) .

3. A converter architecture (41) according to claim 1, wherein said duty cycle parameter (PWM_{TON1}, PWM_{TON1}) is an on time of said one or more PWM signals (PWM₁, PWM₂)

4. A converter architecture (41) according to claim 1 or 2, comprising modules (13, 13a) to scale said reference current and complement reference current to the ratio of the absolute value of the AC input voltage (V_{AC}) to the square of its root mean square value (V_{RMS}).

5. A converter architecture (41) according to claim 1 or 2, wherein said signals (V_{AC}, V_{BUS_FBK}, I_{FBK1}, I_{FBK2}) measured in said converter architecture (41) comprise the AC input voltage (V_{AC}), the measure of the output DC voltage, the one or more feedback currents, while said reference signals (I_{REF}, V_{BUS_REF}) include at least said reference current and voltage reference.

6. A converter architecture (41) according to claim 1 or 2, further comprising a module configured to detect the sign of said AC input voltage (V_{AC}) and a module to multiply the output of said difference module (17, 19) configured to calculate an error current (I_{ERR1}, I_{ERR2}) as difference of the reference current (I_{REF}) to a respective feedback current (I_{FBK1}, I_{FBK2}) by the output of said module to detect the sign of said AC input voltage (V_{AC}) before supplying it to said module (23, 25) configured to sum said complement (I_{REF__COMP}) of said reference current (I_{REF}) to said error current (I_{ERR1}, I_{ERR2}).

7. A converter architecture (41) according to claim 1 or 2, wherein said reference current (I_{REF}) is normalized in an interval between zero and one and said complement (I_{REF__COMP}) of reference current is calculated as the complement to one of said normalized reference current.

8. A converter architecture (41) according to any of the previous claims, wherein said converter architecture (41) comprise a single leg.

9. A method for performing a conversion with Power Factor Correction from an AC input voltage (V_{AC}) to an output DC voltage (V_{BUS}) by the converted architecture (41) of any of claims 1 to 8, comprising performing a control procedure generating PWM signals (PWM₁, PWM₂) on the basis of signals (V_{AC}, V_{BUS_FBK}, I_{FBK1}, I_{FBK2}) measured in said converter architecture (41) and reference signals (I_{REF}, V_{BUS_REF}), comprising performing a voltage regulation (11), in particular PID, having as input a voltage error between a measure of said DC voltage (V_{BUS_FBK}) and a reference voltage (V_{BUS_REF}) and outputting a reference current (I_{REF}), calculating an error current (I_{ERR1}, I_{ERR2}) as difference of the reference current (I_{REF}) to a respective feedback current (I_{FBK1}, I_{FBK2}) flowing in said respective inductor, which is used as input by one or more current regulation (16, 19; 23, 25) operations which are configured to output a duty cycle parameter (PWM_{TON1}, PWM_{TON2}) of said respective PWM signals (PWM₁, PWM₂),
said controlling procedure further comprising calculating a complement (I_{REF_COMP}) of said reference current (I_{REF}) and summing (23, 25) said complement (I_{REF_COMP}) of said reference current (I_{REF}) to said error current (I_{ERR1}, I_{ERR2}) to obtain a duty cycle parameter duty cycle parameter (PWM_{TOFF1}, PWM_{TOFF1}) of said respective PWM signals (PWM₁, PWM₂).
